# EUROPÄISCHE PATENTSCHRIFT

(11) **EP 3 601 999 B1**
(45) Veröffentlichungstag und Bekanntmachung des Hinweises auf die Patenterteilung: **08.07.2020**
(21) Anmeldenummer: 18716181.5
(22) Anmeldetag: 29.03.2018
(51) Int. Cl.: G01N 3/20, G01N 33/00

(54) **VORRICHTUNG ZUR DURCHFÜHRUNG VON BIEGEVERSUCHEN AN PLATTEN- ODER BALKENFÖRMIGEN PROBEN**
DEVICE FOR CARRYING OUT BENDING TESTS ON PANEL-SHAPED OR BEAM-SHAPED SAMPLES
DISPOSITIF POUR EFFECTUER DES ESSAIS DE FLEXION SUR DES ÉCHANTILLONS EN FORME DE PLAQUE OU DE BARRE

(30) Priorität: 29.03.2017 DE 102017205362
(43) Veröffentlichungstag der Anmeldung: 05.02.2020
(73) Patentinhaber: Fraunhofer-Gesellschaft zur Förderung der angewandten Forschung e.V., 80686 München (DE)
(72) Erfinder: SANDER, Christoph, 01277 Dresden (DE); GALL, Martin, 01129 Dresden (DE); MACHER, Frank, 01109 Dresden (DE); CLAUSNER, André, 01099 Dresden (DE); ZSCHECH, Ehrenfried, 01468 Moritzburg (DE)
(74) Vertreter: Pfenning, Meinig & Partner mbB
(86) Internationale Anmeldenummer: PCT/EP2018/058190
(87) Internationale Veröffentlichungsnummer: WO 2018/178288

(56) Entgegenhaltungen:
- EP-A2- 0 499 943
- CN-B- 103 698 202
- US-A1- 2003 192 385
- US-A1- 2006 213 281
- US-A1- 2011 248 739

## Beschreibung

Die Erfindung betrifft eine Vorrichtung zur Durchführung von Biegeversuchen an platten- oder balkenförmigen Proben. Dabei können Proben in zwei entgegengesetzten Richtungen mit homogenen oder inhomogenen Biegemomenten gebogen werden, so dass an den Oberflächen der jeweiligen Probe je nach Biegerichtung Zug- oder Druckspannungen wirken. Mit der Erfindung können unter anderem auch Zug- und Delaminationsuntersuchungen an Proben durchgeführt werden.

Eine der möglichen Experimentalgeometrien ist der so genannte Vier-Punkt-Biege-Test (4PB). Dabei können die Bruchzähigkeit und im Fall von kompositartigen Proben die Haftung von Schichten, die in einer Grenzschicht einer Sandwichprobe ausgebildet sind, bestimmt werden. Während eines solchen Vier-Punkt-Biege-Tests werden balkenförmige Proben mit definierter Geometrie und Dimensionierung gebogen. Die jeweilige balkenförmige Probe wird mit Hilfe von vier Stiften, bei denen mindestens zwei Stifte als Auflager dienen, verformt. Dabei sind jeweils zwei Paare von Stiften an der Unterseite und an der Oberseite der Probe angeordnet und parallel zueinander ausgerichtet. Für Zugspannungen auf der Probenoberseite haben die an der Unterseite angeordneten Stifte einen kleineren Abstand zueinander als das an der Oberseite angeordnete Stiftpaar (für Druckspannungen an der Probenoberfläche ist das Stiftpaar mit kleinerem Abstand an der Oberseite angeordnet). Beim Biegen der Probe wird mindestens ein Stiftpaar senkrecht (mittels Rotation der Stiftaufnahmen) zur Probenoberfläche bewegt und es wirken dabei Druckkräfte auf die Oberfläche, die eine Biegung der Probe bewirken. Die Biegemomente zwischen dem kleineren Stiftpaar sind dabei über die Probenlänge homogen. Über eine getrennte, nicht-parallele Steuerung der Stiftbewegungen kann während eines Experiments auch auftretenden Asymmetrien gegengewirkt oder, bei Bedarf, diese provoziert werden.

Häufig werden parallel zum Biegen auch Untersuchungen an der gebogenen Oberfläche der Probe durchgeführt. So kann die jeweilige Oberfläche mit einem Messgerät, z.B. einem Mikroskop, insbesondere einem Rasterelektronenmikroskop, während der Biegung untersucht werden. Es ist also eine geringe Bauhöhe und eine Zugänglichkeit erforderlich, um mit einem geringen Arbeitsabstand des Mikroskops eine gute Bildqualität zu ermöglichen. Bei gleichzeitiger Materialabtragung mit einem fokussierten lonenstrahl ist dabei der euzentrische Punkt der lonen- und Elektronensäule einzuhalten. Dieser ist gerätespezifisch und erfordert die Einhaltung der maximal zulässigen Probenhöhe. Dies ist bei den bekannten Vorrichtungen je nach Elektronenmikroskop aber nur schwer und mit erhöhtem Aufwand, mit der vorgeschlagenen Vorrichtung jedoch einfach realisierbar.

Die Patentanmeldung US2003/0192385 A1 offenbart eine Vorrichtung zur Durchführung von Biegeversuchen an plattenförmigen Proben gemäß dem Oberbegriff von Anspruch 1.

Außerdem kann an einer Oberfläche der Probe ein Wechsel zwischen Druck- und Zugspannung mit entsprechender Biegung realisiert werden, ohne die Probe entnehmen und den Testaufbau verändern zu müssen. Dies ist bei den bekannten Vorrichtungen nur mit Umbaumaßnahmen inklusive einer möglichen Unterbrechung des Vakuums möglich. Für den Einsatz in einem Rasterelektronenmikroskops muss dabei die Probe mit der Vorrichtung aus der Vakuumkammer ausgeschleust werden. Wechselseitige Belastungen bei gleichzeitiger Untersuchung und ohne Unterbrechung des Vakuums sind so nicht realisierbar.

Der für die translatorische Bewegung der Stifte zum Verbiegen der Probe genutzte Antrieb ist aufwändig in seinem Aufbau, wenn sehr kleine Wege oder Wegdifferenzen bei der Biegung berücksichtigt werden sollen und eine geringe Bauhöhe eingehalten werden soll.

Es ist daher Aufgabe der Erfindung unter Einhaltung einer geringen Bauhöhe die Flexibilität bei der Durchführung von Biegeversuchen mit Lastumkehr an platten- oder balkenförmigen Proben (gegebenenfalls auch mit asymmetrischer Belastung) zu erhöhen und die Zugänglichkeit für Untersuchungen und Manipulationen, insbesondere unter bauraumbeschränkten Bedingungen einer Vakuumkammer an gebogenen Probenoberflächen zu verbessern.

Erfindungsgemäß wird diese Aufgabe mit einer Vorrichtung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen Vorrichtung sind zwei Drehantriebe in einem Abstand zueinander angeordnet. An den parallel zueinander ausgerichteten Antriebswellen der Drehantriebe ist jeweils ein Flansch befestigt. An den Flanschen sind jeweils mindestens zwei parallel zur Rotationsachse der jeweiligen Antriebswelle ausgerichtete, in einem Abstand zur Rotationsachse und in einem Abstand zueinander angeordnete Stifte als stabförmige Biegeelemente, vorhanden, wobei eine platten- oder balkenförmige Probe jeweils zwischen die beiden stabförmigen Biegeelemente an den beiden Flanschen einführbar ist und bei einer Drehung eines oder beider Drehantriebe mit entgegengesetzter oder gleicher Drehrichtung Biegekräfte auf die Probe ausgeübt werden. Die zwei Drehantriebe sind jeweils einzeln ansteuerbar und mit einer elektronischen Steuer- oder Regeleinheit verbunden.

Das Einführen der Probe zwischen die stabförmigen Biegeelemente sollte bevorzugt erfolgen, wenn ein Drehwinkel der Flansche eingestellt worden ist, bei dem die stabförmigen Biegeelemente auf einer Achse angeordnet sind, die nicht horizontal ausgerichtet ist.

Für homogene Spannungszustände auf der Probenoberfläche und homogene Biegemomente sollten die Drehantriebe mit jeweils gleichem Absolutdrehwinkel in gegensätzlicher Richtung drehbar sein, so dass eine gleichmäßige Biegung der Probe zwischen den stabförmigen Biegeelementen erreicht werden kann.

Mit einer solchen Ausführungsform der erfindungsgemäßen Vorrichtung ist es möglich, alternierend an den gegenüberliegend angeordneten und gebogenen Oberflächen der Probe Zug- und Druckspannungen zu erzeugen, ohne dass eine Pause eingelegt werden muss.

Durch die entkoppelte Bewegung der beiden Drehantriebe ermöglicht und besonders vorteilhaft, ist aber eine asynchrone und asymmetrische Drehung der Drehantriebe, bei der die Flansche zu einem gleichen Zeitpunkt unterschiedliche Drehwinkel aufweisen können.

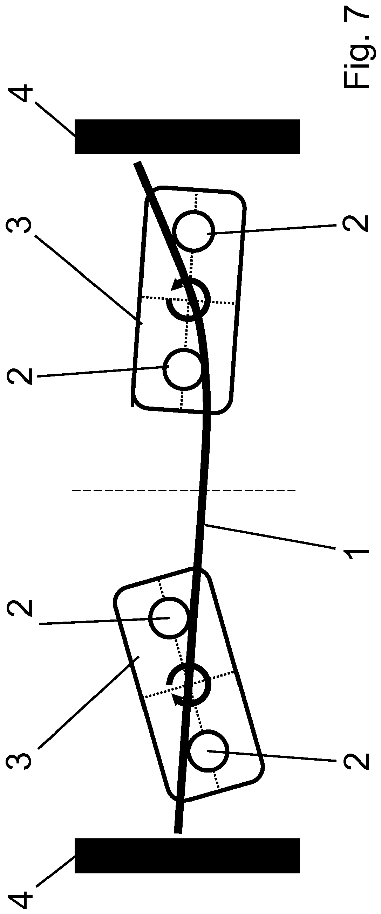

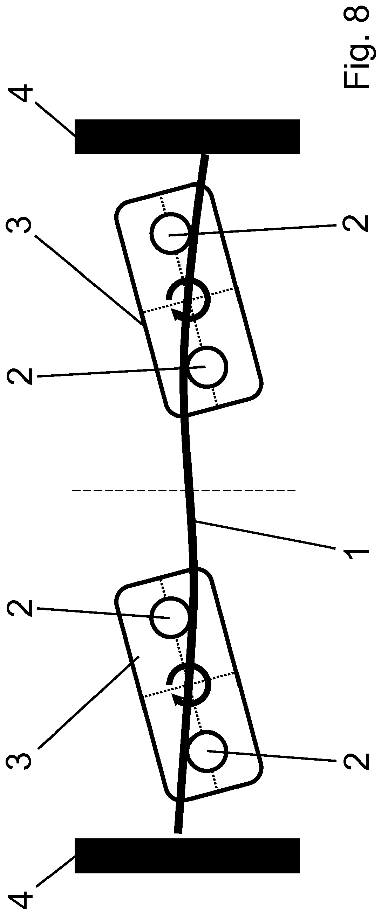

Durch eine asynchrone und asymmetrische Drehung können gezielt Spannungsgradienten auf der Probenoberfläche zwischen den jeweils inneren stabförmigen Biegeelementen, die am jeweiligen Flansch angeordnet sind, eingestellt werden. Dadurch können graduelle Spannungsunterschiede auf der Probenoberfläche zu spannungsabhängigen Effekten führen, wie dies z.B. für eine bevorzugt definierte Rissausbildung möglich ist. Veränderte äußere Einflüsse, wie z.B. Temperatur oder Atmosphären, können auf einer Probe durch diese eingestellten Biegemomentgradienten mit einer Vielzahl von gleichzeitigen Spannungszuständen untersucht und kritische Spannungen erkannt werden (Fig. 7 und Fig. 8).

Die Entkopplung der Drehantriebe erlaubt eine einfache Kalibrierung der Vorrichtung und eine hohe Präzision bei der Durchführung von Biegeverssuchen. So kann eine gezielte Nachregelung, z.B. bei Schrittverlusten von Schrittmotoren als Drehantrieb oder bei Getriebespiel, durchgeführt werden.

Die elektronische Steuer- oder Regeleinheit kann mit mindestens einem Sensor, der zur Bestimmung von Drehmomenten oder Kräften, die an mindestens einem Flansch oder mindestens einem stabförmigen Biegeelement und/oder der Probe wirken, ausgebildet ist, verbunden sein und dessen Messsignale zur Regelung der Drehbewegung der Flansche mit den stabförmigen Biegeelementen genutzt werden können.

Vorteilhaft sind mindestens zwei Sensoren vorhanden, die zur Bestimmung der zwischen einem Stift als stabförmiges Biegeelement und der Probenoberfläche wirkenden Kraft oder eines an einem Flansch oder stabförmigen Biegeelement, bei Berührung des jeweiligen stabförmigen Biegeelements mit der Probenoberfläche wirkenden Drehmomentes ausgebildet und entsprechend am jeweiligen stabförmigen Biegeelement, Flansch und/oder Drehantrieb angeordnet, sowie mit der elektronischen Regeleinheit verbunden sind. Die elektronische Regeleinheit sollte zur Durchführung einer Kalibrierung und/oder Nullpunktkontaktfindung ausgebildet sein.

Zur besseren Auswertung von Biegeversuchen zur spannungsabhängigen Untersuchung der Probenoberseite und auch 4PB - Adhäsionstests an Sandwichproben, kann eine Messung von Drehmomentunterschieden an den stabförmigen Biegeelementen und/oder Flanschen durchgeführt werden. Es ist auch eine Nachregelung bei Momentenungleichgewichten durch Schrittverluste der Drehantriebe oder Getriebespiele möglich. In Kombination mit den unabhängig voneinander drehbaren Flanschen, kann mithilfe von Drehmomentaufnehmern, als zur Bestimmung von Drehmomenten geeigneten Sensoren, beispielsweise der Nullpunkt/Kontaktpunkt der Oberfläche des jeweiligen Flansches an der Oberfläche der Probe bestimmt werden. Eine Kalibrierung kann automatisiert durchgeführt werden.

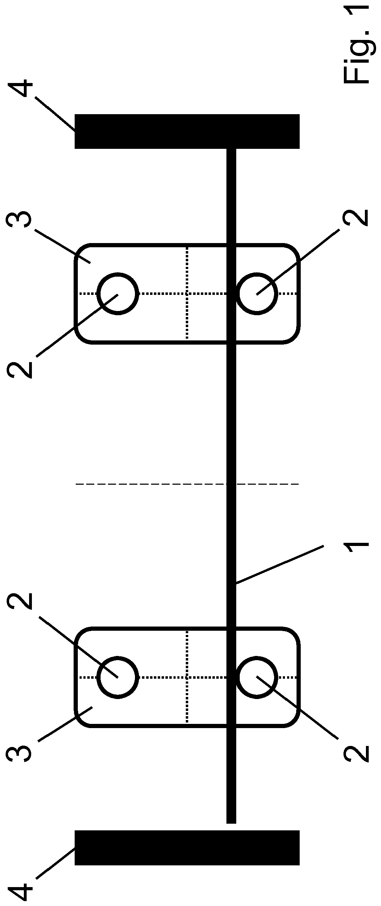

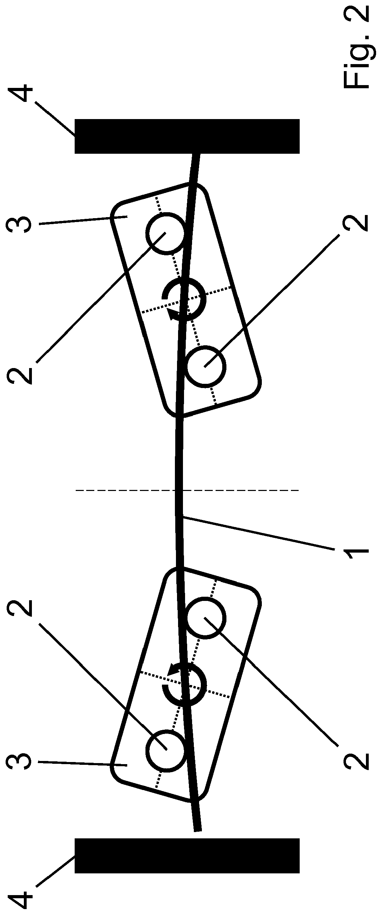

Eine Kalibrierung mit Nullpunktbestimmung kann so erfolgen, dass eine Probe an senkrecht ausgerichteten stabförmigen Biegeelementen an deren Oberflächen eingelegt wird (Fig. 1). Je nach gewünschtem Belastungsmodus (Druck- oder Zugspannung auf der Probenoberseite), können die Flansche mit den stabförmigen Biegeelementen gedreht werden, bis alle vier Biegeelemente Kontakt mit der Probe haben und durch die wirkende Kontaktkräfte an den Kraft- oder Drehmomentsensoren zwischen Flanschen oder stabförmigen Biegeelementen und Antrieb ein zuvor eingestellter geringer Drehmomentschwellwert gemessen wird (Fig. 2). Die Flansche werden dann ein wenig zurückgedreht, so dass das Drehmoment wieder Null wird. Diese Position wird als Nullposition bzw. Kontaktposition gesetzt. Die beiden Flansche können dabei einzeln verdreht werden. Dadurch kann auf eine absolute Positionsbestimmung und -kalibrierung verzichtet werden.

Beim 4PB Versuch mit Sandwichproben wird davon ausgegangen, dass sich ein Riss, der in der Mitte der Probe eingeleitet wird, durch das homogene Biegemoment zwischen den Auflagerpunkten an den innenliegend an den Flanschen angeordneten stabförmigen Biegeelementen, an zwei Rissfronten gleichzeitig in der Grenzschicht zwischen den beiden verklebten Balken einer Probe in Richtung dieser innenliegend angeordneten stabförmigen Biegeelemente ausbreitet. In diesem Fall lässt sich ein Kraftplateau messen, mit dem die Energiefreisetzungsrate berechnet werden kann. Oft kommt es jedoch vor, dass sich ein Riss von der Probenmitte aus in nur eine Richtung ausbreitet, was dazu führt, dass das Biegemoment nicht mehr homogen verteilt ist und die Kraft-Weg-Kurve kein verwertbares Plateau aufweist. Die Momente, die an den beiden Flanschen oder Kräfte und/oder Momente, die an stabförmigen Biegeelementen gemessen werden können, sind dann nicht mehr gleich groß. Dadurch können die Risslängen indirekt gemessen werden. In diesem Fall kann man einen oder beide Flanschdrehwinkel gezielt nachregeln, sodass sich eine höhere Kraftintensität am kürzeren Riss einstellt und das Risswachstum in diesem Teil bevorzugt fortgesetzt wird, sodass die Annahme eines synchronen Risswachstums wiederhergestellt ist. Alternativ können die gemessenen Risslängen direkt ausgewertet werden und damit die Energiefreisetzungsrate ermittelt werden. Dafür ist eine andere Berechnungsmethode, die asymmetrische Risslängen einbezieht, erforderlich.

Vorteilhaft sollten die stabförmigen Biegeelemente zumindest in Oberflächenbereichen, die mit der Oberfläche der Probe in berührendem Kontakt stehen, konvex gekrümmt ausgebildet sein. Dadurch können die wirkenden Reibkräfte zwischen Probenoberfläche und den stabförmigen Biegeelementen durch die erreichbare kleinere linienförmige Auflagefläche reduziert werden. Stabförmige Biegeelemente können dazu beispielsweise einen rotationssymmetrischen Querschnitt aufweisen.

Die wirkenden Reibkräfte können weiter reduziert werden, indem die stabförmigen Biegeelemente mit einem starr mit dem jeweiligen Flansch verbundenen Schaft, auf dem ein Hohlzylinder drehbar angeordnet ist, gebildet sind. Beim Biegen der Probe kann sich der Hohlzylinder drehen, wodurch eine geringere Reibkraftwirkung zu verzeichnen ist.

Der Abstand der stabförmigen Biegeelemente zueinander sollte an den jeweiligen Flanschen veränderbar sein. Dadurch kann eine Veränderung der wirkenden Biegekräfte und -momente erreicht werden. Die stabförmigen Biegeelemente können dazu in einer entsprechenden Führung, die beispielsweise in Form eines Langloches ausgebildet sein kann, bewegt und an einer gewünschten Position fixiert werden. Die Fixierung kann beispielsweise mit einer Klemmvorrichtung realisiert werden. Die Bewegung der stabförmigen Biegeelemente in der jeweiligen Führung kann mit einem geeigneten Antrieb und ggf. zusätzlich mit einem Getriebe realisiert werden. Auch dadurch ist eine gesteuerte Beeinflussung der Biegevorgänge möglich. Es können so die wirkenden Druck-, Zugkräfte, Momente und Biegeradien verändert werden.

Es ist auch eine Anpassung des Abstandes der Antriebswellen der Drehantriebe möglich, wenn insbesondere unterschiedlich dimensionierte Proben untersucht oder unterschiedliche Versuchsbedingungen realisiert werden sollen.

Stabförmige Biegeelemente sollten in ihrer Längsachsrichtung, die parallel zu den Rotationsachsen ausgerichtet sind, eine Länge aufweisen, die mindestens 110 % der Ausdehnung der Probe in dieser Achsrichtung entspricht. Dadurch kann gesichert werden, dass eine gleichmäßige Biegung der Probe über ihre gesamte Breite in dieser Achsrichtung eingehalten werden kann.

An mindestens einer Seite der Vorrichtung sollte ein, das Wandern der Probe in eine Achsrichtung, die parallel zur Längsachsrichtung der unverformten Probe ausgerichtet ist, verhindernder Anschlag vorhanden sein. Besonders bevorzugt soll ein Wandern der Probe in einer senkrecht zu den Rotationsachsen der Drehantriebe ausgerichtete Achsrichtung vermieden werden. Dazu eignet sich in Antriebsrichtung die Einspannung der stabförmigen Biegeelemente. Auf der anderen Seite können die Proben nach dem Einlegen mit einem Blech an den Stiften oder einem starren Winkel am Gehäuse gegen Wandern gesichert werden.

Als Drehantriebe können Reluktanz- oder Permanentmagnet-Schrittmotore, Hybridschrittmotore oder Getriebemotore eingesetzt werden.

Vorteilhaft können an den Flanschen jeweils vier stabförmige Biegeelemente angebracht und so zueinander angeordnet sein, dass die Probe jeweils zwischen zwei ein Paar bildenden stabförmigen Biegeelementen einführbar ist. Die zwei Paare von stabförmigen Biegeelementen, die gemeinsam an einem Flansch befestigt sind, sollten dabei an zwei gegenüberliegenden Seiten der Rotationsachse des jeweiligen Flansches in einem Abstand zur Rotationsachse und die stabförmigen Biegeelemente eines Paares an zwei gegenüberliegenden Oberflächen der Probe angeordnet sein.

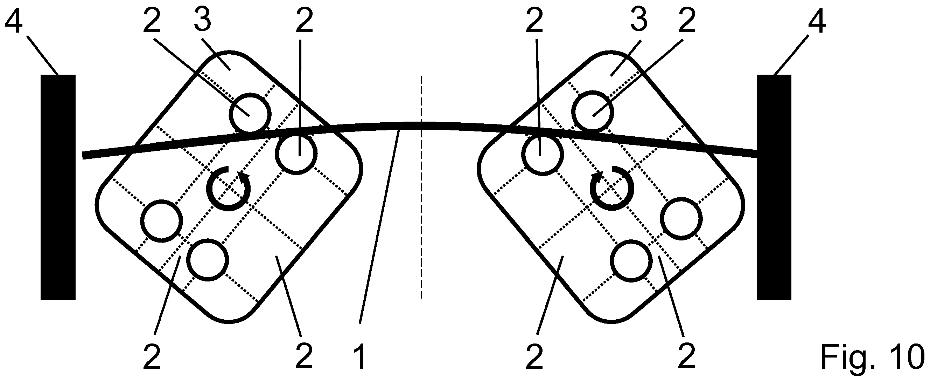

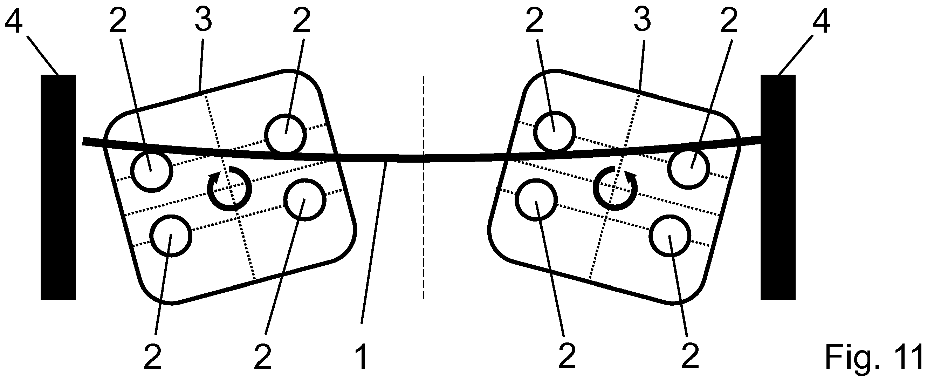

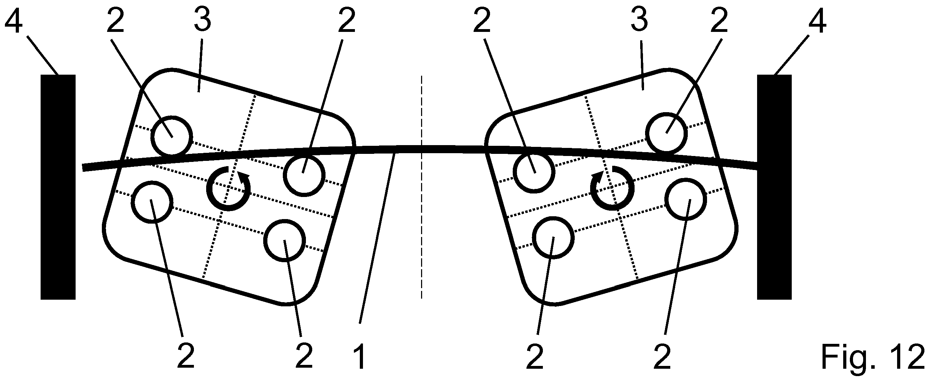

Sind die vier stabförmigen Biegeelemente auf den Flanschen zueinander rechteckig, aber nicht quadratisch angeordnet, führen die unterschiedlichen Abstände zu weiteren Variationsmöglichkeiten, Figur 10, 11, 12.

Im Vergleich zum Stand der Technik sind die unterschiedlichen Biegemodi, die variabel einstellbaren Biegemomente für graduelle Spannungszustände, die vergleichbar geringe Bauhöhe und die Zugänglichkeit für Messgeräte, mit denen Untersuchungen an einer gebogenen Oberfläche von Proben durchgeführt werden sollen, vorteilhaft. Eine Probe kann dadurch auch gleichzeitig mit einem lonenstrahl bearbeitet und einem Elektronenstrahl überwacht werden, um beispielsweise eine aufgetretene Relaxationswirkung bestimmen zu können.

Mit der Erfindung kann eine Umkehr der Biegerichtung, mit der Druck- und Zugspannungen an einer Oberfläche einer Probe erzielt werden, ohne Umbaumaßnahmen, durch einfache Drehrichtungsumkehr der Drehantriebe ermöglicht werden. Es können so mechanische Spannungen in den Probenwerkstoff eingebracht werden, deren Auswirkungen beispielsweise mit einem Mikroskop (Rasterelektronenmikroskop) untersucht werden können.

Es können unterschiedliche Proben untersucht werden, was auch deren Dicke betrifft, ohne dass Umbauten oder zumindest nur geringfügige Anpassungen, an der Vorrichtung erforderlich sind.

Der Aufbau kann sehr gut skaliert werden und ist geeignet für makroskopische Proben, als auch für in-situ Versuche in Mikroskopen oder in analytischen Messgeräten.

In der Vakuumkammer eines Rasterelektronenmikroskops ist vor allem die Bauhöhe zu minimieren. Außerdem sind Schmierstoffe und magnetisierbare Metalle zu vermeiden, was mit der Erfindung erreichbar ist.

So kann wegen der erforderlichen geringen Bauhöhe der euzentrische Punkt der lonen- und Elektronensäule eines REM/FIB Systems erreicht werden.

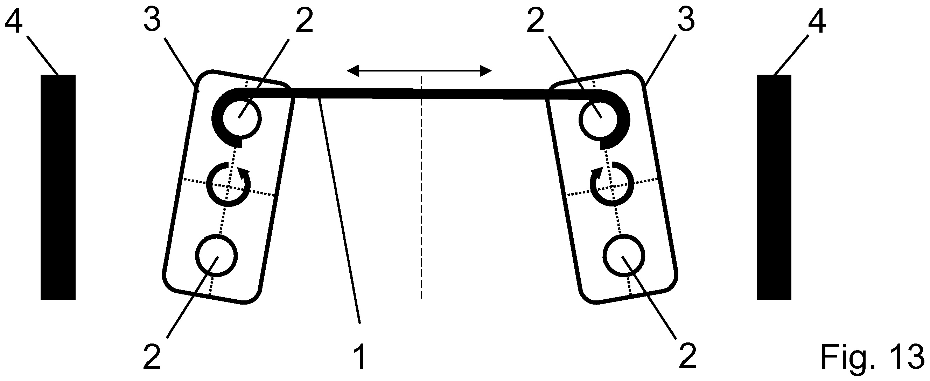

Bei Anbringung von geeigneten Probenaufnahmen, können Zugversuche durchgeführt werden, indem an die vertikal ausgerichteten Flansche, jeweils an dem oberen stabförmigen Biegeelement oder an den am weitesten voneinander an zwei Flanschen angeordneten stabförmigen Biegeelementen eine Probe befestigt wird, und die Probe dann bei entgegengesetztem Verdrehen der Flansche auf Zug belastet wird, Figur 13. Die Befestigung einer Probe kann dabei formschlüssig mittels gebogener Stirnenden an zwei Stiften, durch eine Klemmverbindung oder durch stoffschlüssige Verbindungen (Kleben, Löten, Schweißen) an den Stirnseiten erreicht werden, um Zugversuche mit der Vorrichtung durchführen zu können.

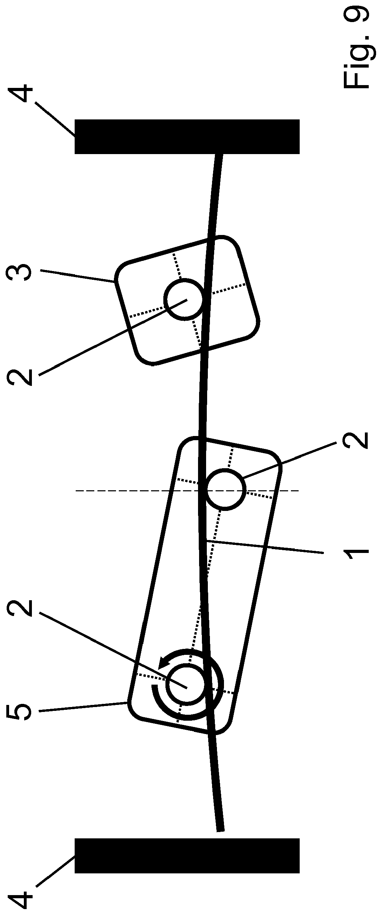

Mit speziellen Haltern kann eine 3-Punkt-Biegung erzielt werden, Figur 9. Die Flansche sind dabei so auszuführen, dass der Flansch, der nicht bewegt werden muss, nur ein stabförmiges Biegeelement aufweist. Der andere Flansch ist so auszuführen, dass sich ein stabförmiges Biegeelement in der Drehachse befindet. Das zweite stabförmige Biegeelement ist bei dieser Ausführung in einem Abstand zum ersten zu positionieren, der der halben Distanz der Drehachsen entspricht.

Nachfolgend soll die Erfindung beispielhaft näher erläutert werden.

Dabei zeigen:
- Figur 1: in schematischer Form ein Beispiel einer erfindungsgemäßen Vorrichtung in einer Ansicht und einer Stellung in der eine Probe zwischen stabförmige Biegeelemente einführbar ist;
- Figur 2: das Beispiel nach Figur 1 in einer Stellung, bei der die stabförmigen Biegeelemente so positioniert sind, dass an der nach oben weisenden Oberfläche der gebogenen Probe Zugspannungen wirken;
- Figur 3: das Beispiel nach Figur 1 in einer Stellung, bei der die stabförmigen Biegeelemente so positioniert sind, dass an der nach oben weisenden Oberfläche der gebogenen Probe Druckspannungen wirken.
- Figur 4: ein Beispiel bei dem jeweils vier stabförmige Biegeelemente an einem Flansch angeordnet sind;
- Figuren 5 und 6: jeweils ein Beispiel, bei denen stabförmige Biegeelemente an einem Flansch unsymmetrisch in Bezug zur Rotationsachse des jeweiligen Flansches angeordnet sind, in zwei Stellungen der Flansche;
- Figur 7: ein Beispiel, bei dem die beiden Flansche wie in Figur 3 gegensätzlich, jedoch mit unterschiedlichem Drehwinkel verdreht sind;
- Figur 8: ein Beispiel, bei dem die Drehantriebe in gleicher Drehrichtung gedreht worden sind;
- Figur 9: ein Beispiel bei dem ein einzelner Flansch fixiert gehalten und mit einem Drehantrieb und zwei in einem Abstand zueinander angeordneten stabförmigen Biegeelementen eine Biegung einer Probe erreichbar ist und der fixierte einzelne Flansch einen Gegenhalter für die Probe bildet;
- Figur 10: das Beispiel nach Figur 4 bei dem die Probe zwischen jeweils zwei der vier stabförmigen Biegeelemente geführt und durch Drehung der Drehantriebe in entgegengesetzter Richtung eine Biegung einer Probe erreicht worden ist;
- Figur 11: ein Beispiel gemäß Figur 4, mit geänderten Biegeelementabständen, bei dem die Probe zwischen den zwei mit jeweils einem Drehantrieb drehbaren Flanschen in einer anderen Position angeordnet ist und mit den Drehantrieben eine Drehung in jeweils entgegengesetzter Drehrichtung erreicht worden ist;
- Figur 12: das Beispiel nach Figur 4 und 11 mit entgegengesetzter Drehrichtung der Flansche und Drehantriebe;
- Figur 13: eine an den äußeren Stirnseiten gebogene Probe, bei der die gebogenen Stirnseiten formschlüssig um jeweils ein stabförmiges Biegeelement, das an jeweils einem Flansch angeordnet ist, gebogen sind, so dass bei Drehung der Flansche mit entgegen gesetzter Drehrichtung ein Zugversuch durchführbar ist und
- Figur 14: in schematischer Form eine Probe für die Durchführung eines Vier-Punkt-Biege Versuchs zur Messung der Adhäsionseigenschaften von Sandwichproben, bei denen der Rissfortschritt beeinflusst werden kann, bzw. einer asymmetrischen Rissöffnung mit der Erfindung entgegengewirkt werden kann sowie die entsprechend wirkenden Kräfte und Momente und die Kräfte, die bei Verformungen durch Biegung einer Probe bei einem symmetrischen und einem asymmetrischen Riss auftreten.

Bei dem in Figur 1 gezeigten Beispiel sind zwei Flansche 3, die mit jeweils einer Antriebswelle eines nicht dargestellten Drehantriebs verbunden sind, in einer Stellung gezeigt, bei der die Flansche 3 so verdreht sind, dass die zwei an den Flanschen 3 befestigten Biegeelemente 2 in einer vertikal ausgerichteten Achse in einem Abstand zueinander angeordnet sind. Dazu sind die Drehantriebe so aktiviert worden, dass sich die Flansche in diese Position gedreht haben.

Die Rotationsachse ist im Flächenschwerpunkt der Flansche 3 angeordnet, in dem sich die eingezeichneten Punkt-Punkt-Linien schneiden. Die Achse der Biegeelemente muss nicht zwingend durch die Rotationsachse verlaufen.

In dieser Stellung der Flansche 3 kann eine platten- oder balkenförmige Probe 1 sehr einfach auf die hier vertikal unten an den Flanschen 3 angeordnete Biegeelemente 2, die parallel zur Rotationsachse ausgerichtet sind, aufgelegt werden.

Am hier gezeigt rechten und linken Rand ist jeweils ein Anschlag 4 vorhanden, an dem sich die entsprechende Stirnfläche der Probe 1 abstützen kann, um ein Wandern der Probe 1 entlang seiner Längsachse zu verhindern.

Mit der Darstellung von Figur 2 wird verdeutlicht, wie eine Biegung der Probe 1 erreicht werden kann, bei der an der nach oben weisenden Oberfläche der Probe Zugspannungen wirken und die Probe 1 in diese Richtung konvex mit an den Oberflächen der Probe 1 wirkenden, mit stabförmigen Elementen 2 eingeleiteten, Druckkräften gebogen worden ist. Dazu wurden die Flansche 3 so gedreht, wie dies mit den Pfeilen verdeutlicht ist. Durch die Drehung der Flansche 3 mit zueinander entgegengesetzter Drehrichtung erfolgt das Biegen der Probe 1 mittels der vier Biegeelemente 2.

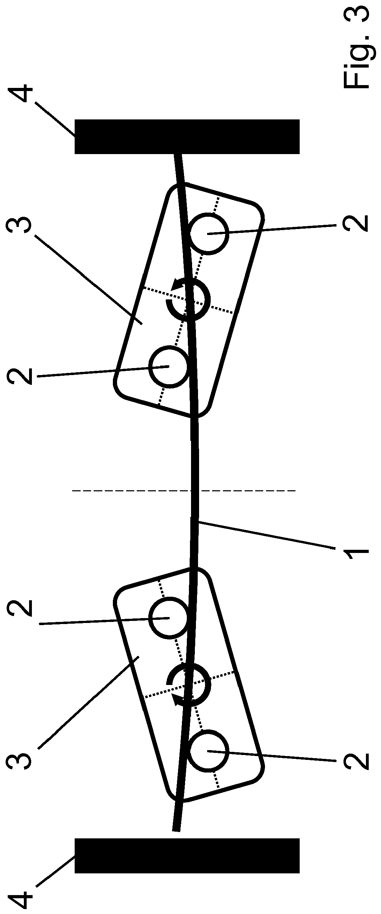

Bei der in Figur 3 gezeigten Biegeposition wurden die Flansche 3 mit den jeweiligen Biegeelementen 2 in entgegen gesetzter Drehrichtung gedreht, so dass die Probe 1 von oben gesehen konkav verformt worden ist und an der nach oben weisenden Oberfläche Druckspannungen im Probenwerkstoff wirken. Dies kann mit Druckkräften, die mit den gedrehten Biegeelementen 2 auf die Probe 1 ausgeübt werden, erreicht werden.

Es genügt also allein eine Drehrichtungsumkehr, um an Oberflächen von Proben 1 alternierend Druck- und dann Zugspannungen oder umgekehrt wirken zu lassen. Ein Umbau der Vorrichtung ist dazu nicht erforderlich.

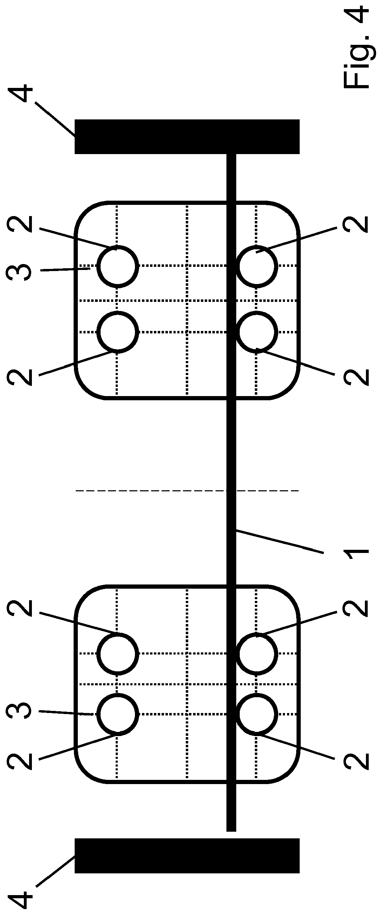

Die Figur 4 zeigt ein Beispiel mit jeweils vier Biegeelementen 2, die an einem Flansch 3 angeordnet sind. Oberhalb und unterhalb der Probe 1 sind dabei jeweils zwei Biegeelemente 2 in einem Abstand zueinander und in einem Abstand zur Rotationsachse des jeweiligen Flansches 3 angeordnet. Die Abstände können an Ober- und Unterseite jeweils gleich groß sein.

Mit einem so ausgebildeten Beispiel kann durch eine gegenläufige Drehung der Flansche 3 in jeweils eine Richtung eine konkave Biegung der Probe 1 an der vertikal nach oben weisenden Oberfläche mit entsprechender konvexer Biegung der vertikal unteren Probenoberfläche erreicht werden, was zu Druckspannungen im Bereich der vertikal oberen und zu Zugspannungen an der vertikal unteren Oberfläche der Probe 1 führt.

Werden die Flansche dann in jeweils entgegengesetzter Drehrichtung gedreht erfolgen Biegung und Kraftwirkung genau umgekehrt.

Bei einer Anordnung der Biegeelemente 2 vertikal ober- und unterhalb der Probe 1, bei der die Probe 1 mit kleinem Spiel zwischen den vertikal oben und unten angeordneten Biegeelementen 2 angeordnet werden kann, können sehr einfach und schnell wechselnde Spannungswirkungen an den Oberflächen der Probe 1 erreicht, wenn die Drehrichtung der Flansche 3 entsprechend schnell und synchron an den beiden Flanschen 3 gewechselt wird.

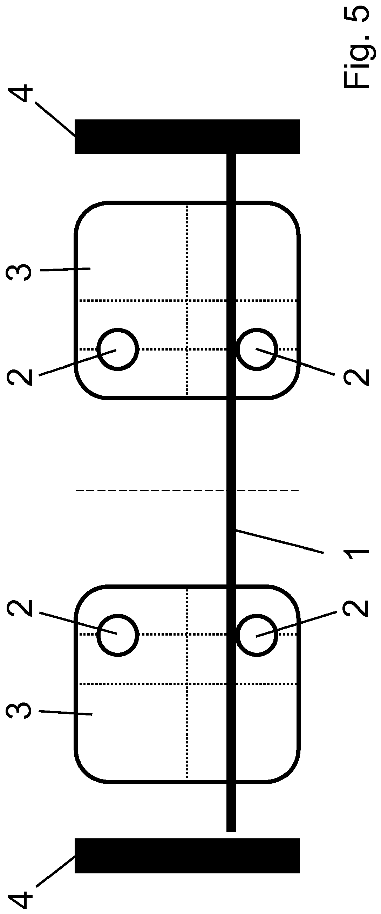

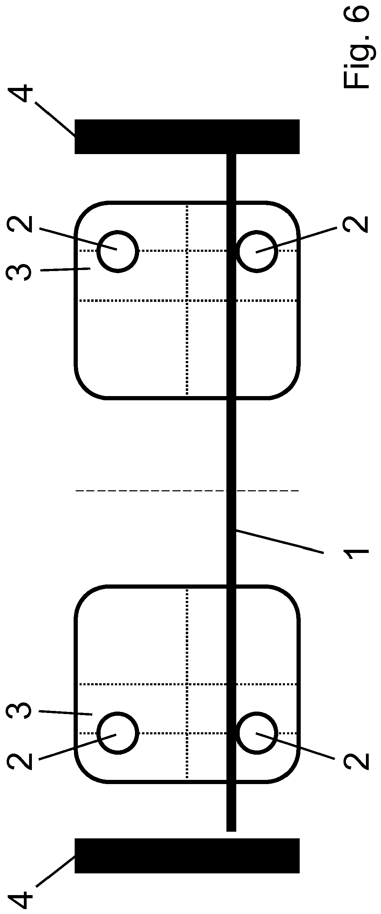

Die Figuren 5 und 6 sollen verdeutlichen, dass auch eine unsymmetrische entsprechende Anordnung von Biegeelementen 2 an einem Flansch 3 in Bezug zur Rotationsachse, die bei diesem Beispiel im Flächenschwerpunkt des jeweiligen Flansches 3, also in der Darstellung im Schnittpunkt der Punkt-Punkt-Linien angeordnet ist, möglich ist, um die entsprechenden Kraft- und Biegewirkungen auf die Probe 1 ausüben zu können.

Mit den Figuren 7 und 8 sollen Möglichkeiten verdeutlicht werden, wie mit unterschiedlicher Drehung von Flanschen 3 eine Probe 1 mit stabförmigen Biegeelementen 2 bei der Drehung der Flansche 3 gebogen werden kann.

Figur 9 zeigt ein Beispiel für die Durchführung eines 3-Punkt-Biege-Versuchs, bei dem an einem Flansch 3 lediglich ein stabförmiges Biegeelement 2 angeordnet ist, das ein Widerlager bei der Drehung des jeweils anderen Flansches 3 bilden kann. An diesem anderen Flansch sind dann mindestens zwei stabförmige Biegeelemente 2 in einem Abstand zueinander angeordnet, zwischen denen die Probe 1 geführt und mit denen eine Biegung der Probe 1 erreicht werden kann. Wobei sich ein Biegeelement 2 in der Drehachse des Flansches 3 befindet.

Die Figuren 10 bis 12 zeigen Beispiele bei denen an den Flanschen 3 jeweils vier stabförmige Elemente 2 vorhanden sind und die bei Drehung der Flansche 3 für die Biegung einer Probe 1 in unterschiedlicher Form genutzt werden können.

Figur 13 zeigt ein Beispiel für die Durchführung eines Zugversuches. Dabei sind die Stirnseiten der Probe 1 so gebogen, dass sie stabförmige Biegeelemente 2 an zwei Flanschen 3 hintergreifen und so eine formschlüssige Verbindung erreichbar ist. Werden die Flansche 3 mit entgegengesetzter Drehrichtung gedreht, kann ein Zugversuch durchgeführt werden. Dazu können an den Flanschen 3 und/oder stabförmigen Elementen 2 mit entsprechend ausgebildeten und angeordneten Sensoren gemessene Kräfte und/oder Momente genutzt werden.

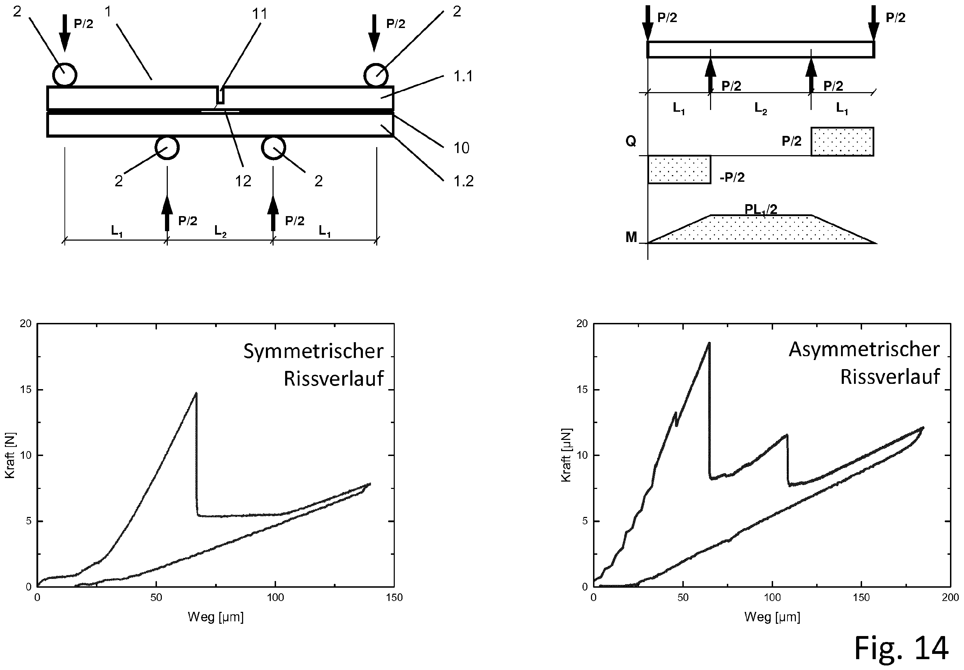

In Figur 14 ist eine Probe 1 gezeigt, die als Sandwichprobe mit zwei mit einem adhäsiven Film 10 verbundenen Siliziumplättchen 1.1 und 1.2 ausgebildet ist, die einem Vierpunktbiegeversuch 4PB unterzogen wird. Im oberen Siliziumplättchen 1.1 ist ein Voranriss 11 ausgebildet. In diesem Bereich kann sich eine Rissausbreitung 12 entlang der Verbindungsfläche zwischen den mit dem adhäsiven Film 10 verbundenen Siliziumplättchen 1.1 und 1.2 bei der Biegung der Probe 1 ausbilden.

Es kann davon ausgegangen werden, dass sich ein Riss 12, der in der Mitte der Probe 1 eingeleitet wird, durch das homogene Biegemoment zwischen den inneren stabförmigen Biegeelementen 2 bei deren Drehung und Biegung der Probe 1, an zwei Rissfronten gleichzeitig in der Grenzschicht zwischen den beiden verklebten Siliziumplättchen 1.1 und 1.2 in Richtung der an der Probe 1 weiter innen angeordneten stabförmigen Biegeelemente 2 ausbreitet. In diesem Fall lässt sich ein Kraftplateau messen, mit dem die Energiefreisetzungsrate berechnet werden kann. Oft kommt es jedoch vor, dass nur eine Seite aufreißt, was dazu führt, dass das Biegemoment nicht mehr homogen verteilt ist und die Kraft-Weg-Kurve kein verwertbares Plateau aufweist. Die Momente, die an stabförmigen Biegeelementen 2 oder den zugehörigen Flanschen 3 gemessen werden können, sind dann nicht mehr gleich groß. Die Risslängen können so indirekt gemessen werden. In diesem Fall kann man einen oder beide Flansche 3 gezielt nachregeln, so dass sich eine höhere Kraftintensität an der Rissspitze des kürzeren Risses einstellt und das Risswachstum in diesem Teil bevorzugt fortgesetzt wird, so dass die Annahme eines synchronen Risswachstums wiederhergestellt werden kann. Oder die gemessenen Risslängen können direkt ausgewertet werden. Da die Symmetrievoraussetzung dann nicht mehr gegeben ist, ist - unter Einbeziehung der unterschiedlichen Risslängen - eine andere Berechnung der Energiefreisetzungsrate erforderlich.

## Patentansprüche

1. Vorrichtung zur Durchführung von Biegeversuchen an platten- oder balkenförmigen Proben (1), bei der zwei Drehantriebe in einem Abstand zueinander angeordnet sind und an den parallel zueinander ausgerichteten Antriebswellen der Drehantriebe jeweils ein Flansch (3) befestigt ist und
an den Flanschen (3) jeweils mindestens zwei parallel zur Rotationsachse der jeweiligen Antriebswelle ausgerichtete, in einem Abstand zur Rotationsachse und in einem Abstand zueinander angeordnete stabförmige Biegeelemente (2) vorhanden sind, wobei eine platten- oder balkenförmige Probe (1) jeweils zwischen die beiden stabförmigen Biegeelemente (2) an den beiden Flanschen (3) einführbar ist und bei einer Drehung der Drehantriebe mit entgegengesetzter Drehrichtung Biegekräfte auf die Probe (1) ausgeübt werden,
**dadurch gekennzeichnet, dass**
jeder der zwei Drehantriebe einzeln ansteuerbar und mit einer elektronischen Steuer- oder Regeleinheit verbunden ist.

2. Vorrichtung nach Anspruch 1, **dadurch gekennzeichnet, dass** die Drehantriebe synchron mit jeweils gleichem Drehwinkel drehbar sind.

3. Vorrichtung nach Anspruch 1, **dadurch gekennzeichnet, dass** die Drehantriebe asynchron mit jeweils einem eigenen Drehwinkel drehbar sind.

4. Vorrichtung nach einem der vorhergehenden Ansprüche, **dadurch gekennzeichnet, dass** die elektronische Steuer- oder Regeleinheit mit mindestens einem Sensor, der zur Bestimmung von Drehmomenten oder Kräften, die an mindestens einem Flansch (3), an mindestens einem stabförmigen Biegeelement (2) und/oder der Probe (1) wirken ausgebildet ist, verbunden ist und dessen Messsignale zur Regelung der Drehbewegung der Flansche (3) nutzbar sind.

5. Vorrichtung nach einem der vorhergehenden Ansprüche, **dadurch gekennzeichnet, dass** mindestens zwei Sensoren vorhanden sind, die zur Bestimmung des zwischen einem Flansch (3) und/oder stabförmigen Biegeelementen (2) und der Probenoberfläche wirkenden Kraft oder einem an einem Flansch (3) bei Berührung eines stabförmigen Biegeelementes (2) mit der Probenoberfläche wirkenden Drehmoment ausgebildet und entsprechend am jeweiligen Flansch (3), stabförmigen Element (2) und/ oder Drehantrieb angeordnet, sowie mit der elektronischen Regeleinheit verbunden sind.

6. Vorrichtung nach einem der vorhergehenden Ansprüche, **dadurch gekennzeichnet, dass** die elektronische Regeleinheit zur Durchführung einer Kalibrierung und/oder Nullpunktkontaktfindung ausgebildet ist.

7. Vorrichtung nach einem der vorhergehenden Ansprüche, **dadurch gekennzeichnet, dass** die stabförmigen Biegeelemente (2) zumindest in Oberflächenbereichen, die mit der Oberfläche der Probe (1) in berührendem Kontakt stehen, konvex gekrümmt ausgebildet sind.

8. Vorrichtung nach einem der vorhergehenden Ansprüche, **dadurch gekennzeichnet, dass** der Abstand der stabförmigen Biegeelemente (2) zueinander an den jeweiligen Flanschen (3) veränderbar ist.

9. Vorrichtung nach einem der vorhergehenden Ansprüche, **dadurch gekennzeichnet, dass** die stabförmigen Biegeelemente (2) mit einem starr mit dem jeweiligen Flansch (3) verbundenen Schaft, auf dem ein Hohlzylinder drehbar angeordnet ist, gebildet sind.

10. Vorrichtung nach einem der vorhergehenden Ansprüche, **dadurch gekennzeichnet, dass** an mindestens einer Seite der Vorrichtung ein das Wandern der Probe (1) in eine Achsrichtung, die parallel zur Längsachsrichtung der unverformten Probe (1) ausgerichtet ist, verhindernder Anschlag (4) vorhanden ist.

11. Vorrichtung nach einem der vorhergehenden Ansprüche, **dadurch gekennzeichnet, dass** die Drehantriebe als Reluktanz- oder Permanentmagnet-Schrittmotore, Hybridschrittmotore oder Getriebemotore ausgebildet sind.

12. Vorrichtung nach einem der vorhergehenden Ansprüche, **dadurch gekennzeichnet, dass** an den Flanschen (3) jeweils vier stabförmige Biegeelemente (2) angebracht und so zueinander angeordnet sind, dass die Probe (1) jeweils zwischen zwei ein Paar bildenden Biegeelementen (3) einführbar ist und die zwei Paare von Biegeelementen (2), die gemeinsam an einem Flansch (3) befestigt sind, an zwei gegenüberliegenden Seiten der Rotationsachse des jeweiligen Flansches (3) in einem Abstand zur Rotationsachse und
die Biegeelemente (2) eines Paares an zwei gegenüberliegenden Oberflächen der Probe (1) angeordnet sind.

13. Vorrichtung nach einem der vorhergehenden Ansprüche, **dadurch gekennzeichnet, dass** an den Flanschen (3) zwei stabförmige Biegeelemente (2) angebracht und so angeordnet sind, dass die Rotationsachse der Flansche (3) nicht auf der Verbindungslinie der Biegeelemente (2) liegt.

## Claims

1. A device for carrying out bending tests on slab-shaped or beam-shaped specimens (1), in which two rotary drives are disposed at a mutual spacing and one flange (3) is in each case fastened to the mutually parallel aligned drive shafts of the rotary drives, and
at least two bar-shaped bending elements (2) that are aligned so as to be parallel to the rotation axis of the respective drive shaft and at a spacing from the rotation axis and at a mutual spacing are in each case present on the flanges (3), wherein
one slab-shaped or beam-shaped specimen (1) is in each case introducible between the two bar-shaped bending elements (2) at the two flanges (3), and bending forces are exerted on the specimen (1) in a rotation of the rotary drives in opposite rotation directions,
**characterized in that**
each of the two rotary drives is individually actuatable and is connected to an electronic open-loop or closed-loop control unit.

2. The device as claimed in claim 1, **characterized in that** the rotary drives are rotatable in a synchronous manner so as to have in each case the same rotation angle.

3. The device as claimed in claim 1, **characterized in that** the rotary drives are rotatable in an asynchronous manner, so as to have in each case a dedicated rotation angle.

4. The device as claimed in one of the preceding claims, **characterized in that** the electronic open-loop or closed-loop control unit is connected to at least one sensor which is configured for determining torques or forces which act on at least one flange (3), on at least one bar-shaped bending element (2), and/or the specimen (1), and the measuring signals of said sensor are utilizable for the closed-loop controlling of the rotating movement of the flanges (3).

5. The device as claimed in one of the preceding claims, **characterized in that** at least two sensors which are configured for determining the force that acts between a flange (3) and/or bar-shaped bending elements (2) and the specimen surface, or a torque that acts on a flange (3) in the event of physical contact between a bar-shaped bending element (2) and the specimen surface are present and accordingly disposed on the respective flange (3), bar-shaped element (2) and/or rotary drive, and are connected to the electronic closed-loop control unit.

6. The device as claimed in one of the preceding claims, **characterized in that** the electronic closed-loop control unit is configured for carrying out a calibration and/or establishing a zero-point contact.

7. The device as claimed in one of the preceding claims, **characterized in that** the bar-shaped bending elements (2) are configured so as to be convexly curved at least in surface regions which are in physical contact with the surface of the specimen (1).

8. The device as claimed in one of the preceding claims, **characterized in that** the mutual spacing of the bar-shaped bending elements (2) on the respective flanges (3) is variable.

9. The device as claimed in one of the preceding claims, **characterized in that** the bar-shaped bending elements (2) are formed having a shaft which is rigidly connected to the respective flange (3) and on which a hollow cylinder is rotatably disposed.

10. The device as claimed in one of the preceding claims, **characterized in that** a detent (4) which prevents the specimen (1) from wandering in an axial direction which is aligned so as to be parallel to the longitudinal axial direction of the non-deformed specimen (1) is present on at least one side of the device.

11. The device as claimed in one of the preceding claims, **characterized in that** the rotary drives are configured as reluctance or permanentmagnet stepper motors, hybrid stepper motors, or gear motors.

12. The device as claimed in one of the preceding claims, **characterized in that** four bar-shaped bending elements (2) are in each case attached to the flanges (3) and mutually disposed such that the specimen (1) is in each case introducible between two bending elements (3) forming one pair, and the two pairs of bending elements (2) that are conjointly fastened to one flange (3) are disposed on two opposite sides of the rotation axis of the respective flange (3), at a spacing from the rotation axis, and the bending elements (2) of one pair are disposed on two opposite surfaces of the specimen (1).

13. The device as claimed in one of the preceding claims, **characterized in that** two bar-shaped bending elements (2) are attached to the flanges (3) and disposed such that the rotation axis of the flanges (3) does not lie on the connecting line of the bending elements (2).

## Revendications

1. Dispositif pour la réalisation d'essais de flexion sur des échantillons en forme de plaques ou de barres (1), dans lequel deux entraînements rotatifs sont disposés à une distance entre eux et sur chacun des arbres d'entraînement parallèles des entraînements rotatifs est fixée une bride (3) et
sur chacune des brides (3) sont prévus deux éléments de flexion (2) en forme de tiges, orientés parallèlement à l'axe de rotation de l'arbre d'entraînement respectif, disposés de manière distante par rapport à l'axe de rotation et de manière distante entre eux, dans lequel
un échantillon en forme de plaque ou de barre (1) peut être introduit entre les deux éléments de flexion en forme de tiges (2) sur les deux brides (3) et, lors d'une rotation des entraînements rotatifs avec un sens de rotation inverse, des forces de flexion sont exercées sur l'échantillon (1),
**caractérisé en ce que**
chacun des deux entraînements rotatifs est relié de manière contrôlable individuellement et avec une unité de contrôle ou de régulation électronique.

2. Dispositif selon la revendication 1, **caractérisé en ce que** les entraînements rotatifs tournent de manière synchrone avec le même angle de rotation.

3. Dispositif selon la revendication 1, **caractérisé en ce que** les entraînements rotatifs tournent de manière asynchrone avec chacun leur propre angle de rotation.

4. Dispositif selon l'une des revendications précédentes, **caractérisé en ce que** l'unité de contrôle ou de régulation électronique est reliée avec au moins un capteur qui est conçu pour la détermination des couples ou des forces qui agissent sur au moins une bride (3), sur au moins un élément de flexion en forme de tige (2) et/ou l'échantillon (1) et dont les signaux de mesure peuvent être utilisés pour la régulation du mouvement de rotation des brides (3).

5. Dispositif selon l'une des revendications précédentes, **caractérisé en ce qu'**au moins deux capteurs sont prévus, qui sont conçus pour la détermination de la force agissant entre une bride (3) et/ou les éléments en forme de tiges (2) et la surface de l'échantillon ou d'un couple agissant sur une bride (3) lors du contact d'un élément de flexion en forme de tige (2) avec la surface de l'échantillon et qui sont reliés de manière correspondante à la bride (3), à l'élément en forme de tige (2) et/ou à l'entraînement rotatif respectif, ainsi qu'avec l'unité de régulation électronique.

6. Dispositif selon l'une des revendications précédentes, **caractérisé en ce que** l'unité de régulation électronique est conçue pour la réalisation d'un calibrage et/ou de la découverte du contact du point zéro.

7. Dispositif selon l'une des revendications précédentes, **caractérisé en ce que** les éléments de flexion en forme de tiges (2) présentent une forme incurvée convexe au moins dans les zones de la surface qui sont en contact avec la surface de l'échantillon (1).

8. Dispositif selon l'une des revendications précédentes, **caractérisé en ce que** la distance des éléments de flexion en forme de tiges (2) entre eux sur les brides (3) respectives peut être modifiée.

9. Dispositif selon l'une des revendications précédentes, **caractérisé en ce que** les éléments de flexion en forme de tiges (2) sont constitués d'un arbre relié de manière rigide avec la bride (3) respective, sur lequel est disposé, de manière rotative, un cylindre creux.

10. Dispositif selon l'une des revendications précédentes, **caractérisé en ce que**, sur au moins un côté du dispositif, est prévue une butée (4) empêchant le mouvement de l'échantillon (1) dans une direction axiale orientée parallèlement à la direction axiale longitudinale de l'échantillon (1) non déformé.

11. Dispositif selon l'une des revendications précédentes, **caractérisé en ce que** les entraînements rotatifs sont conçus comme des moteurs pas-à-pas à réluctance ou à aimants permanents, des moteurs pas-à-pas hybrides ou des motoréducteurs.

12. Dispositif selon l'une des revendications précédentes, **caractérisé en ce que**, sur chacune des brides (3) sont montés quatre éléments de flexion en forme de tiges (2) et sont disposés les uns par rapport aux autres, de façon à ce que chaque échantillon (1) puisse être introduit entre deux éléments de flexion (3) formant une paire et les deux paires d'éléments de flexion (2), qui sont fixées conjointement sur une bride (3), sont disposées sur deux côtés opposés de l'axe de rotation de la bride (3) respective à une certaine distance de l'axe de rotation et les éléments de flexion (2) d'une paire sont disposés sur deux surfaces opposées de l'échantillon (1).

13. Dispositif selon l'une des revendications précédentes, **caractérisé en ce que**, sur les brides (3) sont montés deux éléments de flexion en forme de tiges (2) et sont disposés de façon à ce que l'axe de rotation des brides (3) ne se trouve pas sur la ligne de liaison des éléments de flexion (2).
